# EUROPEAN PATENT APPLICATION

(11) **EP 4 036 758 A1**
(43) Date of publication of application: **03.08.2022**
(21) Application number: 20878083.3
(22) Date of filing: 10.08.2020
(51) Int. Cl.: G06F 16/9535, G06F 21/62

(54) **RECOMMENDATION METHOD AND APPARATUS BASED ON USER PRIVATE DATA, AND MEDIUM AND SYSTEM**

(30) Priority: 25.10.2019 CN 201911021266
(71) Applicant: Huawei Technologies Co., Ltd., Longgang District Shenzhen, Guangdong 518129 (CN)
(72) Inventor: YU, Chao, Shenzhen, Guangdong 518129 (CN); ZHAO, An, Shenzhen, Guangdong 518129 (CN); WANG, Yunlu, Shenzhen, Guangdong 518129 (CN); ZHU, Yue, Shenzhen, Guangdong 518129 (CN); PENG, Lu, Shenzhen, Guangdong 518129 (CN)
(74) Representative: Pfenning, Meinig & Partner mbB
(86) International application number: PCT/CN2020/108248
(87) International publication number: WO 2021/077860

(57) **Abstract**

A user privacy data-based recommendation method and apparatus, a medium, and a system are provided. The recommendation method includes: sending a user preference tag to a cloud (100), where the user preference tag includes a first generalized tag obtained after a first tag generated based on privacy data of a user is generalized; receiving a plurality of resource items found by the cloud (100) from a resource library based on the user preference tag; and selecting a recommended resource item from the plurality of resource items. In this way, an accurate, thoughtful, and personalized recommendation service can be more intelligently provided for the user in a case in which generalized privacy data instead of user privacy data is uploaded.

## Description

This application claims priority to Chinese Patent Application No. 201911021266.3, filed with the China National Intellectual Property Administration on October 25, 2019 and entitled "USER PRIVACY DATA-BASED RECOMMENDATION METHOD AND APPARATUS, MEDIUM, AND SYSTEM", which is incorporated herein by reference in its entirety.

### TECHNICAL FIELD

This application relates to the information security field, and in particular, to a user privacy data-based recommendation method and apparatus, a medium, and a system.

### BACKGROUND

In recent years, with rapid development of artificial intelligence, people have a stronger demand for intelligent life. For modern people, mobile terminals become universal devices that integrate entertainment, work, and learning activities, and play a role of personal intelligent assistants. The greatest value of AI (Artificial Intelligence, artificial intelligence) to terminals is that the entrance is more accurate, user-friendly, and convenient. User understanding, active services, and lifelong learning can bring ultimate user experience and become the future of intelligent terminals. Currently, AI algorithms and terminal computing capabilities are developing rapidly. Major vendors are focusing on fully utilizing various resource advantages to provide users with accurate, thoughtful, comprehensive, and personalized services through mobile terminals.

As people pay more attention to personal privacy data, the demand for not uploading personal privacy data to a cloud becomes stronger. A manner of uploading user privacy data to a cloud for analysis is not approved and will not be used in the future. Currently, major vendors have focused on how to provide users with accurate, thoughtful, comprehensive, and personalized services through mobile terminals without uploading personal privacy data of the users to a cloud.

Currently, in all AI-related recommendation services provided by a mobile terminal, such as music recommendation, video recommendation, application recommendation, news recommendation, and advertisement recommendation, non-personal-privacy data uploaded by a user is analyzed for recommendation. However, this part of data cannot represent all characteristics of the user.

### SUMMARY

Embodiments of this application provide a user privacy data-based recommendation method and apparatus, a medium, and a system.

According to a first aspect, some embodiments of this application disclose a recommendation method, including: sending a user preference tag to a cloud, where the user preference tag includes a first generalized tag obtained after a first tag generated based on privacy data of a user is generalized; receiving a plurality of resource items that are returned by the cloud and that are found from a resource library based on the user preference tag; and selecting a recommended resource item from the plurality of resource items. In other words, in the recommendation method, the first generalized tag of the first tag generated based on the privacy data of the user is sent to the cloud, and the cloud may search, based on the first generalized tag, for a resource item related to the privacy data of the user. In this way, in a case in which a search result is more accurate, intelligent, and personalized, no privacy data of the user is uploaded to the cloud, and the privacy data is protected. It may be understood that the first generalized tag herein may be one tag, or may be a plurality of tags. A quantity of tags is not limited.

In an implementation of the first aspect, the selecting a recommended resource item from the plurality of resource items includes: ranking the plurality of resource items based on the first tag of the user, to generate a first ranking result; and using a predetermined quantity of resource items that are in the front position in the first ranking result as the recommended resource item. In other words, in this implementation, search results returned by the cloud are ranked based on the first tag that is directly related to the user privacy data, and a resource item having a high matching degree with the first tag (which may be one tag or a plurality of tags, and a quantity of tags is not limited) may be ranked at the top. The cloud performs search based on the generalized first tag or generalized user privacy data, and a range of the first generalized tag is broader than that of the first tag. Therefore, retrieved content may be redundant, and when the retrieved content is ranked based on the first tag or non-generalized user privacy data, a search result that is closer to the user privacy data may be ranked at the top. In this way, a resource item recommended to the user is closer to used user privacy data, so that user experience is more personalized. In addition, the predetermined quantity of resource items that are in the front position in the first ranking result are not necessarily used as recommended resource items, and another selection rule may be set. This is not limited herein. For example, odd items in the predetermined quantity of resource items that are in the front position are used as recommended resource items.

In an implementation of the first aspect, the plurality of resource items include a first resource item found by the cloud based on the first generalized tag; and the method further includes: displaying the first resource item and a first recommendation reason corresponding to the first resource item on a screen when the recommended resource item includes the first resource item, where the first recommendation reason is generated based on the first tag corresponding to the first generalized tag that is used when the first resource item is retrieved. In other words, in this implementation, if the resource items found by the cloud include resource items related to the generalized user privacy data, recommendation reasons are generated for the resource items based on privacy data corresponding to the generalized user privacy data when these resource items are found. In addition, the recommendation reasons are displayed or broadcast to the user, so that a recommendation service is more intelligent.

In an implementation of the first aspect, the user preference tag further includes a second tag generated based on non-privacy data of the user, and the non-privacy data of the user is all data other than the privacy data of the user in data for describing the user; and the plurality of resource items returned by the cloud further include a second resource item found by the cloud based on the second tag. In other words, in this implementation, both the first generalized tag related to the user privacy data and the second tag related to the user non-privacy data are sent to the cloud. A search result is related to the generalized user privacy data and the user non-privacy data.

In an implementation of the first aspect, the plurality of resource items found by the cloud further include a second recommendation reason corresponding to the second resource item, and the second recommendation reason is related to the second tag that is used when the second resource item is found. In other words, if the resource items returned by the cloud include a resource item found based on a non-privacy tag (or non-privacy data) of the user, a recommendation reason corresponding to the resource item is also returned.

In an implementation of the first aspect, the method further includes: displaying the second resource item and the second recommendation reason on a screen when the recommended resource item includes the second resource item.

In an implementation of the first aspect, the selecting a recommended resource item from the plurality of resource items includes: ranking the plurality of resource items based on at least one second tag, to generate a second ranking result. To be specific, during search, the resource item may be found based on one second tag. When the plurality of found resource items are ranked, the resource items may be ranked based on a plurality of second tags, and a resource item that matches the plurality of second tags is ranked at the top.

In an implementation of the first aspect, the selecting a recommended resource item from the plurality of resource items further includes: determining whether a duplicate resource item exists in the second ranking result; and deleting the duplicate resource item when it is determined that the duplicate resource item exists.

In an implementation of the first aspect, the selecting a recommended resource item from the plurality of resource items further includes: ranking the second ranking result based on the first tag, to generate a third ranking result; and using a predetermined quantity of resource items that are in the front position in the third ranking result as the recommended resource item. The cloud performs search based on the generalized first tag or generalized user privacy data, and a range of the first generalized tag is broader than that of the first tag. Therefore, retrieved content may be redundant, and when the retrieved content is ranked based on the first tag or non-generalized user privacy data, a search result that is closer to the user privacy data may be ranked at the top. In this way, a resource item recommended to the user is closer to used user privacy data, so that user experience is more personalized. In addition, the predetermined quantity of resource items that are in the front position in the third ranking result are not necessarily used as recommended resource items, and another selection rule may be set. This is not limited herein. For example, odd items in the predetermined quantity of resource items that are in the front position are used as recommended resource items.

According to a second aspect, some embodiments of this application disclose a recommendation method, including: receiving a user preference tag from a terminal, where the user preference tag includes a first generalized tag obtained after a first tag generated based on privacy data of a user is generalized; searching, based on the received user preference tag, a resource library for a resource item that matches the user preference tag; and sending the found resource item to the terminal when the resource item that matches the user preference tag is found. In other words, in the recommendation method, a cloud receives the first generalized tag of the first tag generated based on the user privacy data from the terminal, and the cloud may search, based on the first generalized tag, for a resource item related to the privacy data of the user. In this way, in a case in which a search result is more accurate, intelligent, and personalized, no privacy data of the user needs to be obtained, and the privacy data is protected. It may be understood that the first generalized tag herein may be one tag, or may be a plurality of tags. A quantity of tags is not limited.

In an implementation of the second aspect, the user preference tag further includes a second tag generated based on non-privacy data of the user, and the non-privacy data of the user is all data other than the privacy data of the user in data for describing the user; and the plurality of resource items further include a second resource item found by the cloud based on the second tag. In other words, in this implementation, the cloud receives both the first generalized tag related to the user privacy data and the second tag related to the user non-privacy data. A search result is related to the generalized user privacy data and the user non-privacy data.

In an implementation of the second aspect, the method further includes: generating, based on the second tag, a second recommendation reason corresponding to the second resource item. In other words, if the resource item found by the cloud includes a resource item found based on a non-privacy tag (or non-privacy data) of the user, a recommendation reason corresponding to the resource item is also generated.

In an implementation of the second aspect, the method further includes: ranking, based on the second tag, resource items to be sent to the terminal to generate a second ranking result; determining whether a duplicate resource item exists in the second ranking result; and deleting the duplicate resource item when it is determined that the duplicate resource item exists. To be specific, during search, the resource item may be found based on one second tag. When the plurality of found resource items are ranked, the resource items may be ranked based on a plurality of second tags, and a resource item that matches the plurality of second tags is ranked at the top.

In an implementation of the second aspect, the resource item includes a first resource item found by the cloud based on the first generalized tag.

According to a third aspect, some embodiments of this application disclose a recommendation apparatus, including: a first sending module, configured to send a user preference tag to a cloud, where the user preference tag includes a first generalized tag obtained after a first tag generated based on privacy data of a user is generalized; a first receiving module, configured to receive a plurality of resource items that are returned by the cloud and that are found from a resource library based on the user preference tag; and a selection module, configured to select a recommended resource item from the plurality of resource items.

According to a fourth aspect, some embodiments of this application disclose a recommendation apparatus, including: a second receiving module, configured to receive a user preference tag from a terminal, where the user preference tag includes a first generalized tag obtained after a first tag generated based on privacy data of a user is generalized; a search module, configured to search, based on the received user preference tag, a resource library for a resource item that matches the user preference tag; and a second sending module, configured to send the found resource item to the terminal when the resource item that matches the user preference tag is found.

According to a fifth aspect, some embodiments of this application disclose a machine-readable medium. The machine-readable medium stores instructions, and when the instructions are executed on a machine, the machine is enabled to perform the recommendation method in the first aspect or the second aspect.

According to a sixth aspect, some embodiments of this application disclose a system, including:
a memory, configured to store instructions executed by one or more processors of the system; and
a processor, which is one of the processors of the system and is configured to perform the recommendation method in the first aspect or the second aspect.

According to a seventh aspect, embodiments of this application disclose a terminal. The terminal has a function of implementing behavior of the terminal in the foregoing method. The function may be implemented by hardware, or may be implemented by hardware by executing corresponding software. The hardware or the software includes one or more modules corresponding to the function.

According to an eighth aspect, embodiments of this application disclose a cloud. The cloud has a function of implementing behavior of the cloud in the foregoing method. The function may be implemented by hardware, or may be implemented by hardware by executing corresponding software. The hardware or the software includes one or more modules corresponding to the function.

### BRIEF DESCRIPTION OF DRAWINGS

FIG. 1 is a schematic diagram of a structure of a user privacy data-based recommendation system according to some embodiments of this application;
FIG. 2 is a schematic diagram of structures of a terminal and a cloud in the system shown in FIG. 1 according to some embodiments of this application;
FIG. 3 is a schematic diagram in which a terminal broadcasts and displays a recommended song according to some embodiments of this application;
FIG. 4 is a schematic diagram in which a terminal broadcasts and displays a recommended song according to some embodiments of this application;
FIG. 5A and FIG. 5B are a working flowchart of the terminal in the system shown in FIG. 1 according to some embodiments of this application;
FIG. 6 is a working flowchart of the cloud in the system shown in FIG. 1 according to some embodiments of this application;
FIG. 7 is a schematic diagram of a structure of a recommendation apparatus according to some embodiments of this application;
FIG. 8 is a schematic diagram of a structure of a recommendation apparatus according to some embodiments of this application;
FIG. 9 is a block diagram of a system according to some embodiments of this application; and
FIG. 10 is a block diagram of a system on a chip (SoC) according to some embodiments of this application.

### DESCRIPTION OF EMBODIMENTS

Illustrative embodiments of this application include but are not limited to a privacy data-based recommendation method and apparatus, a medium, and a system.

It may be understood that as used in this specification, the term "module" may be or include an application-specific integrated circuit (ASIC), an electronic circuit, a memory and/or a processor (shared, dedicated, or a group) that executes one or more software or firmware programs, a combined logic circuit, and/or another appropriate hardware component that provides a described function, or may be a part of these hardware components.

The following further describes in detail embodiments of this application with reference to accompanying drawings.

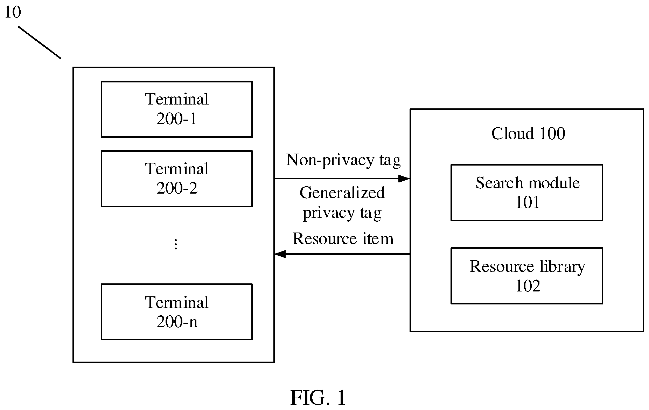

Some embodiments of this application disclose a user privacy data-based recommendation system 10. FIG. 1 is a schematic diagram of a structure of the recommendation system 10. As shown in FIG. 1, the system 10 includes a cloud 100 and a plurality of terminals that request the cloud 100 to search for resource items to be recommended to a user, for example, terminals 200-1 to 200-n. The cloud 100 is configured to search a resource library for a related resource item for the terminal based on a generalized privacy tag (that is, a first generalized tag) and a non-privacy tag (that is, a second tag) of the user. In some embodiments, the cloud 100 may search a resource library owned by the cloud 100, such as a music library, a news library, or an application library. In some other embodiments, the cloud 100 may alternatively search a resource library stored in another device. The cloud 100 may be any computing device having a search function and the like, including but not limited to an electronic device such as a mobile phone, a tablet computer, a laptop computer, a desktop computer, a wearable device, a head mounted display, a mobile email device, a portable game console, a portable music player, a reader device, a personal digital assistant, a virtual reality or augmented reality device, or a television that one or more processors are embedded in or coupled to.

The terminals 200-1 to 200-n in this application each may obtain, from the cloud 100 by sending a generalized privacy tag to the cloud 100, a search result related to user privacy data, and rank, based on a privacy tag (that is, a first tag), resource items in the search result returned by the cloud 100, to provide a personalized recommendation service for the user more intelligently. In addition, the terminals 200-1 to 200-n each may further generate, based on the privacy tag of the user, a recommendation reason corresponding to a recommended resource item, and display the related recommendation reason when displaying the recommended resource item to the user. The terminals 200-1 to 200-n each may be any user-oriented computing device, including but not limited to an electronic device such as a mobile phone, a tablet computer, a laptop computer, a desktop computer, a wearable device, a head mounted display, a mobile email device, a portable game console, a portable music player, a reader device, a personal digital assistant, a virtual reality or augmented reality device, or a television that one or more processors are embedded in or coupled to.

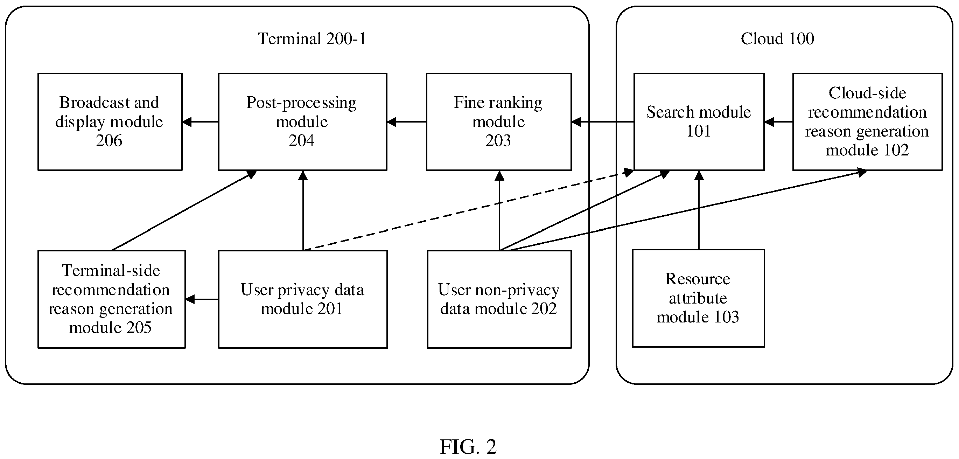

The following describes technical solutions of this application in detail by using structures of the terminal 200-1 and the cloud 100 shown in FIG. 2 as an example. It may be understood that the technical solutions of this application are applicable to terminals and cloud devices of various structures, and are not limited to the structures shown in FIG. 2.

Specifically, as shown in FIG. 2, the cloud 100 includes a search module 101, a cloud-side recommendation reason generation module 102, and a resource attribute module 103. The search module 101 may select, based on a non-privacy tag and a generalized privacy tag of a user that are uploaded by the terminal 200-1, a resource item that matches the non-privacy tag and the generalized privacy tag from the resource attribute module 103 (which may include a music library 100-1, a news library 100-2, an application library 100-3, and the like that are of the cloud 100), and then deliver a resource item ID, corresponding tag details, and a recommendation reason generated for the found resource item to the terminal 200-1.

The cloud-side recommendation reason generation module 102 may generate, based on the non-privacy tag uploaded by the terminal 200-1, the recommendation reason for the resource item found from the resource attribute module 103, for example, generate a recommendation reason for a song found from the music library 100-1. For example, if an age tag corresponding to the song "Love of Mine" is "post-80s", a recommendation reason generated by the cloud-side recommendation reason generation module 102 for the song is "search reason - age - post-80s".

The resource attribute module 103 may be a cloud-side resource library, for example, may include one or more of a music library, a news library, an application library, and the like. Each resource or each resource item in the module has a corresponding resource attribute tag. For example, tags of the song "Love of Mine" include "song name - Love of Mine", "singer - Andy Lau", "age - post-80s", "style - lyric", and the like. For example, tags of a game application A include "category - game", "picture - Chinese style", "historical background - Warring States Period", and the like. The module selects and returns a corresponding song based on the generalized privacy tag or the non-privacy tag that is input by the search module 101.

As shown in FIG. 2, the terminal 200-1 includes a user privacy data module 201, a user non-privacy data module 202, a fine ranking module 203, a post-processing module 204, a terminal-side recommendation reason generation module 205, and a broadcast and display module 206.
(1) The user privacy data module 201 generates a privacy tag and a generalized privacy tag of a user based on obtained user privacy data. The privacy tag may be used by the terminal-side post-processing module 204 and the terminal-side recommendation reason generation module 205.

It may be understood that the user privacy data in this application may be user data that can distinguish the user from another user, for example, an exercise status of the user, a current location of the user, a residence location, an age of the user, a mobile phone number, and an identity card number. If the user privacy data is disclosed, personal safety, information security, and property security of the user are threatened. In addition, the privacy data may alternatively be personal data that the user is unwilling to disclose, for example, a medical record, a medical examination report, or family member information.

It may be understood that the privacy tag may be a keyword generated based on the user privacy data. For example, if the age of the user is 18, the privacy tag of the user may be "post-OOs"; if the user resides in Chengdu, the privacy tag of the user may be Chengdu; if the user privacy data indicates that the user is a student, the privacy tag of the user may be a student; if a current status of the user is running, the privacy tag of the user may be running.... The generalized privacy tag may be a broader concept of the privacy tag, and covers a broader range than the privacy tag. The generalized privacy tag may include a plurality of different privacy tags. For example, the generalized privacy tag may be at least one category to which the privacy tag belongs. For a spatial location, time, and the like, the generalized privacy tag may have a larger spatial range or time range than the privacy tag. For example, if a privacy tag is running, a generalized privacy tag of the privacy tag may be exercise, and the exercise may also be a generalized privacy tag of a privacy tag such as swimming or riding. For another example, if a privacy tag is sleeping, a generalized privacy tag of the privacy tag may be a timetable. In addition, the timetable may also be a generalized privacy tag of getting-up, a noon break, or the like.

(2) The user non-privacy data module 202 may be configured to obtain a behavior log generated by the user on a related recommendation service, for example, a favorite song, singer, age, and style of the user within a week in a music application, a section to which news frequently browsed by the user within a month in a news application belongs, or a category of an application that the user searches for and downloads recently. Then, a non-privacy tag is generated based on obtained feature data that describes the user. For example, if the user recently likes to listen to rock songs, a non-privacy tag "rock" may be generated, or if the user recently likes to watch military news, a non-privacy tag "military" may be generated. The non-privacy data may be from the behavior log of the user, or may be user data that is requested to be entered or selected by the user and that can be uploaded to the cloud 100. For example, a related application may list some tags for the user to select, and tags selected by the user may be used as non-privacy tags of the user. The data is not unique to one or a few users, and is not distinctive.

The non-privacy tag that is output by the module is separately used by the search module 101 and the cloud-side recommendation reason generation module 102 of the cloud 100, and the fine ranking module 203.

(3) The fine ranking module 203 may rank a list of resource items found by the search module 101 of the cloud 100, to obtain a ranked resource item list (that is, a second ranking result), where the ranking is based on content of the user non-privacy tag stored in the terminal 200-1, and a resource item that better matches the non-privacy tag can be ranked at the top. If the user has only one privacy tag "singer - Jay Chou", an output of the fine ranking module 203 ranks Jay Chou's songs at the top.

In addition, it may be understood that the fine ranking module 203 may alternatively rank the resource item list based on the non-privacy tag after comprehensive analysis, and is not limited to performing ranking based on a matching degree with the non-privacy tag. For example, the fine ranking module 203 may perform ranking by using a user preference and a song preference as an input and by using a CTR (Click-Through Rate, click-through rate) estimation/LTR (Learning To Rank, learning to rank) method in machine learning.

It may be understood that, non-privacy tags used when the fine ranking module 203 ranks the resource item list may be more than non-privacy tags that are used when the resource items in the resource item list are found. In other words, the fine ranking module 203 is a comprehensive ranking module. For example, a non-privacy tag used to search for a song A and a song B in a resource item list is "post-80s". During ranking, if the non-privacy tag includes not only "post-80s" but also a singer C, and a resource attribute tag of only the song A indicates that the song A is sung by the singer C, the song A is ranked before the song B.

It may be understood that, in other embodiments, because the non-privacy tag may be uploaded to the cloud, a function of the fine ranking module 203 may alternatively be performed on the cloud 100, and is not limited to being performed on the terminal 201-1.

(4) The post-processing module 204 may include three functions: deduplication, re-ranking, and truncation. The deduplication refers to removing a duplicate resource item when the duplicate resource item exists in a resource item list that is output by the fine ranking module 203.

The re-ranking may refer to re-ranking, based on the privacy tag (or user privacy data) of the user and a manually specified rule, a resource item list obtained after deduplication (that is, obtaining a third ranking result). For example, if the user privacy data includes "exercise status - running", the manually specified rule is "rank a song suitable for a running rhythm at the top during running", there are three exercise-related songs in the resource item list obtained after deduplication, and a resource attribute tag of the song A is "exercise status - running", a sequence of a song list is adjusted to rank the song with the "exercise status - running" tag at the top. It may be understood that the manually specified rule is a predefined ranking rule. For example, for some resource items that cannot be ranked based on user privacy data, a ranking rule may be manually set after rules are summarized.

The truncation may refer to deleting an excess item when a quantity of resource items in a re-ranked resource item list exceeds a preset quantity. For example, if a length of a re-ranked song list exceeds a specified quantity of returned resource items, redundant items are truncated. For example, if there are 15 songs in a song list after deduplication and re-ranking and 10 songs need to be returned to the user for one song recommendation, the last five songs are discarded.

(5) The terminal-side recommendation reason generation module 205 may generate, based on the privacy tag stored in the terminal 200-1, a recommendation reason for a resource item processed by the post-processing module. For example, if an age tag corresponding to the song "Runaway Baby" is "running", a recommendation reason generated by the module for the song is "recommendation reason - exercise status - running"; and if a city tag corresponding to the news "house price trend in Shenzhen" is "Shenzhen", a recommendation reason generated by the module for the news is "recommendation reason - city - Shenzhen".

(6) The broadcast and display module 206 may feed back, to the user, a resource item list that is output after post-processing, and feedback manners may include voice broadcast and display, where the display may be displaying one resource item and hide the other resource items in the list, or displaying the entire resource item list; and the broadcast is selecting a recommendation reason of a resource item ranked first for script configuration and voice broadcast. For example, a script may be "It is late at night, please let the beautiful song 'Red Bean' accompany you to sleep".

It may be understood that the broadcast and display module 206 may alternatively have another feedback manner. This is not limited herein. For example, vibration and voice broadcast may be used.

The following uses music recommendation in a music application as an example to describe a process of implementing intelligent and personalized recommendation for a user based on the structures shown in FIG. 2. Specifically, the process includes the following steps.
(1) The user initiates a request related to a recommendation service, and the user privacy data module 201 and the user non-privacy data module 202 of the terminal 200-1 respectively upload a non-privacy tag of the user and a generalized privacy tag of the user. For example, in some scenarios, the user initiates a music recommendation request by using a voice assistant of the terminal 200-1: "My assistant, play a song for me". The terminal 200-1 uploads content of the non-privacy tag of the user and the generalized privacy tag to the cloud 100, where the content of the non-privacy tag of the user includes: "singer - Jay Chou" and "age - post-80s", and the generalized privacy tag includes: "exercise status" and "timetable".

It may be understood that, in other embodiments of this application, the recommendation service may alternatively be actively initiated by the terminal 200-1, rather than initiated by the user. Therefore, this is not limited herein.

In addition, it may be understood that, in other embodiments of this application, in some scenarios, the terminal 200-1 may alternatively upload only the generalized privacy tag of the user but not upload the non-privacy tag.

(2) The search module 101 of the cloud 100 may receive the non-privacy tag of the user sent by the terminal 200-1, and search for a resource item in the resource attribute module 103 based on a degree of matching between the non-privacy tag and a resource attribute tag. The cloud-side recommendation reason generation module 102 generates a corresponding recommendation reason for a resource item found by using the non-privacy tag of the user.

For example, if non-privacy tags of the user received by the search module 101 of the cloud 100 are "singer - Jay Chou" and "age - post-80s", the search module 101 searches a music library of the resource attribute module 103 based on the two non-privacy tags and obtains a search result of two songs: "East Wind Breaks" and "Love of Mine" that have the following information:
songId_1: song name = Love of Mine, singer = Andy Lau, age = post-80s;
songId_2: song name = East Wind Breaks, singer = Jay Chou, age = post-80s;
songId_3: song name = Love of Mine_concert edition, singer = Andy Lau, age = post-80s.

It may be understood that, in some embodiments, if the terminal 200-1 uploads only the generalized privacy tag of the user but does not upload the non-privacy tag, this function may be omitted.

The recommendation reason generation module 102 generates corresponding recommendation reasons (that is, second recommendation reasons) for the foregoing two songs based on the non-privacy tags used during searching, and a result is as follows:
songId_1: song name = Love of Mine, singer = Andy Lau, age = post-80s, recommendation reason = {age = post-80s};
songId_2: song name = East Wind Breaks, singer = Jay Chou, age = post-80s, recommendation reason = {singer = Jay Chou, age = post-80s};
songId_3: song name = Love of Mine_concert edition, singer = Andy Lau, age = post-80s, recommendation reason = {age = post-80s}.

It may be understood that, in some embodiments, if the terminal 200-1 uploads only the generalized privacy tag of the user but does not upload the non-privacy tag, this function may be omitted.

(3) After receiving the generalized privacy tag, the search module 101 of the cloud 100 may search for a resource item corresponding to a resource attribute tag in the resource attribute module 103.

For example, for the foregoing music recommendation, generalized privacy tags received by the search module 101 include: "exercise status" and "timetable". The search module 101 searches the music library in the resource attribute module 103, and a search result is as follows:
songId_4: song name = Running, singer = Yu Quan, exercise status = running;
songId_5: song name = Desert Camel, singer = Rabbit Bros, exercise status = cycling;
songId_6: song name = Red Bean, singer = Faye Wong, timetable = bedtime;
songId_7: song name = Malaysia Chabor, singer = Joyce Chu, timetable = early morning.

(4) The search module 101 may combine resource item lists found in (2) and (4) and the recommendation reasons generated in (2), and return the combination to the cloud.

The foregoing example is still used, and specifically, the search module 101 returns the following content to the terminal 200-1:
songId_1: song name = Love of Mine, singer = Andy Lau, age = post-80s, recommendation reason = {age = post-80s};
songId_2: song name = East Wind Breaks, singer = Jay Chou, age = post-80s, recommendation reason = {singer = Jay Chou, age = post-80s};
songId_3: song name = Love of Mine_concert edition, singer = Andy Lau, age = post-80s, recommendation reason = {age = post-80s};
songId_4: song name = Running, singer = Yu Quan, exercise status = running;
songId_5: song name = Desert Camel, singer = Rabbit Bros, exercise status = cycling;
songId_6: song name = Red Bean, singer = Faye Wong, timetable = bedtime;
songId_7: song name = Malaysia Chabor, singer = Joyce Chu, timetable = early morning.

(5) The fine ranking module 203 of the terminal 200-1 may receive the resource item lists and the recommendation reasons (including a plurality of resource items and the second recommendation reasons) returned by the search module 101 of the cloud 100, and perform similarity matching and ranking based on the non-privacy tag of the user, and a resource item with a high similarity to the content of the non-privacy tag of the user is ranked at the top.

Specifically, for the foregoing example, the fine ranking module 203 performs similarity matching and ranking based on the non-privacy tag of the user stored in the terminal 200-1 ("singer - Jay Chou" and "age - post-80s"). A resource item with a high similarity to the content of the non-privacy tag of the user is ranked at the top. In this example, songId_2 has the highest matching degree, and therefore songId_2 is at the top, songId_1 and songId_3 follow behind, and the rest songs rank at the end. A result is as follows:
songId_2: song name = East Wind Breaks, singer = Jay Chou, age = post-80s, recommendation reason = {singer = Jay Chou, age = post-80s};
songId_1: song name = Love of Mine, singer = Andy Lau, age = post-80s, recommendation reason = {age = post-80s};
songId_3: song name = Love of Mine_concert edition, singer = Andy Lau, age = post-80s, recommendation reason = {age = post-80s};
songId_4: song name = Running, singer = Yu Quan, exercise status = running;
songId_5: song name = Desert Camel, singer = Rabbit Bros, exercise status = cycling;
songId_6: song name = Red Bean, singer = Faye Wong, timetable = bedtime;
songId_7: song name = Malaysia Chabor, singer = Joyce Chu, timetable = early morning.

(6) The post-processing module 204 may receive a resource item list finely ranked by the fine ranking module 203. If a duplicate resource item exists in the list, the post-processing module 204 removes the duplicate resource item.

Specifically, for the foregoing example, after receiving the following resource item list obtained after fine ranking, the post-processing module 204 finds that both songs of songId_1 and songId_3 are "Love of Mine"sung by Andy Lau. In this case, a deduplication operation is performed on the list, and only songId_1 is retained. A result is as follows:
songId_2: song name = East Wind Breaks, singer = Jay Chou, age = post-80s, recommendation reason = {singer = Jay Chou, age = post-80s};
songId_1: song name = Love of Mine, singer = Andy Lau, age = post-80s, recommendation reason = {age = post-80s};
songId_4: song name = Running, singer = Yu Quan, exercise status = running;
songId_5: song name = Desert Camel, singer = Rabbit Bros, exercise status = cycling;
songId_6: song name = Red Bean, singer = Faye Wong, timetable = bedtime;
songId_7: song name = Malaysia Chabor, singer = Joyce Chu, timetable = early morning.

(7) The post-processing module 204 may further re-rank a resource item list obtained after deduplication, where the re-ranking is based on a degree of matching between the privacy tag and a manually specified rule, and a resource item with a high matching degree is ranked at the top.

Specifically, for the foregoing example, the post-processing module 204 re-ranks the resource item list obtained after deduplication, where the re-ranking is based on the degree of matching between the content of the privacy tag and the manually specified rule. If the user is currently running (that is, a privacy tag is "exercise status = running"), and the manually specified rule is "a song with 'exercise status = running' is ranked at the top, and the other songs are ranked after a resource item with a non-privacy tag", a matching and re-ranking result is as follows:
songId_4: song name = Running, singer = Yu Quan, exercise status = running;
songId_2: song name = East Wind Breaks, singer = Jay Chou, age = post-80s, recommendation reason = {singer = Jay Chou, age = post-80s};
songId_1: song name = Love of Mine, singer = Andy Lau, age = post-80s, recommendation reason = {age = post-80s};
songId_5: song name = Desert Camel, singer = Rabbit Bros, exercise status = cycling;
songId_6: song name = Red Bean, singer = Faye Wong, timetable = bedtime;
songId_7: song name = Malaysia Chabor, singer = Joyce Chu, timetable = early morning.

(8) The terminal-side recommendation reason generation module 205 may generate a corresponding recommendation reason based on the privacy tag, and assign the recommendation reason to a resource item found by the cloud 100 based on the generalized privacy tag.

Specifically, for the foregoing example, the terminal-side recommendation reason generation module 205 may generate a corresponding recommendation reason "recommendation reason = {exercise status = running}" based on the privacy tag "exercise status = running", and assign the recommendation reason to songId_4. A result is as follows:
songId_4: song name = Running, singer = Yu Quan, exercise status = running, recommendation reason = {exercise status = running};
songId_2: song name = East Wind Breaks, singer = Jay Chou, age = post-80s, recommendation reason = {singer = Jay Chou, age = post-80s};
songId_1: song name = Love of Mine, singer = Andy Lau, age = post-80s, recommendation reason = {age = post-80s};
songId_5: song name = Desert Camel, singer = Rabbit Bros, exercise status = cycling;
songId_6: song name = Red Bean, singer = Faye Wong, timetable = bedtime;
songId_7: song name = Malaysia Chabor, singer = Joyce Chu, timetable = early morning.

(9) When a quantity of resource items in the re-ranked resource item list exceeds a quantity of resource items that need to be returned for one service request, the post-processing module 204 truncates the re-ranked resource item list and removes an excess resource item ranked at the end.

Specifically, for the foregoing example, the post-processing module 204 of the terminal 200-1 truncates the resource item list obtained after deduplication and re-ranking. If three songs need to be returned to the user for one service request, the post-processing module 204 truncates songs behind the third song in the list. A result is as follows:
songId_4: song name = Running, singer = Yu Quan, exercise status = running, recommendation reason = {exercise status = running};
songId_2: song name = East Wind Breaks, singer = Jay Chou, age = post-80s, recommendation reason = {singer = Jay Chou, age = post-80s};
songId_1: song name = Love of Mine, singer = Andy Lau, age = post-80s, recommendation reason = {age = post-80s}.

(10) The broadcast and display module 206 may feed back, to the user, a resource item list that is output by the terminal-side post-processing module 204, and feedback manners may include voice broadcast and display, where the display may be displaying one resource item and hide the other resource items in the list, or displaying the entire resource item list; and the broadcast may be selecting a recommendation reason of a resource item ranked first for script configuration and voice broadcast.

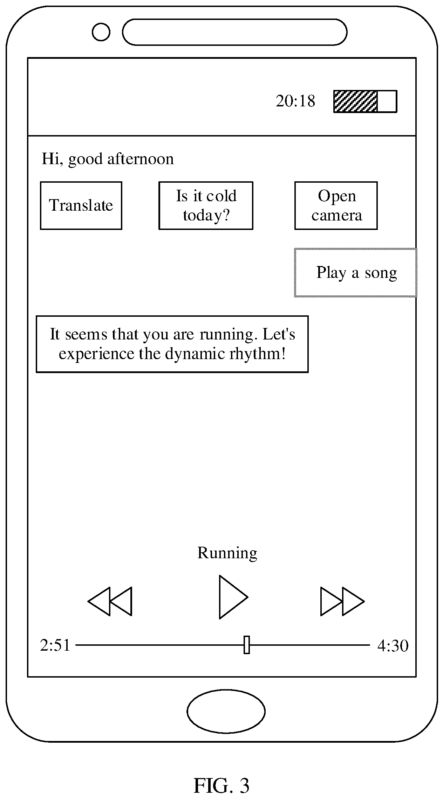

For example, for the foregoing example, as shown in FIG. 3, the terminal-side broadcast and display module 206 feeds back, to the user, the resource item list that is output by the terminal-side post-processing module 204, displays the song name "Running" of the first song, and configures a script for the first song: "It seems that you are running. Let's experience the dynamic rhythm". The script is broadcast by a voice assistant while being displayed, so as to complete feedback for the user request.

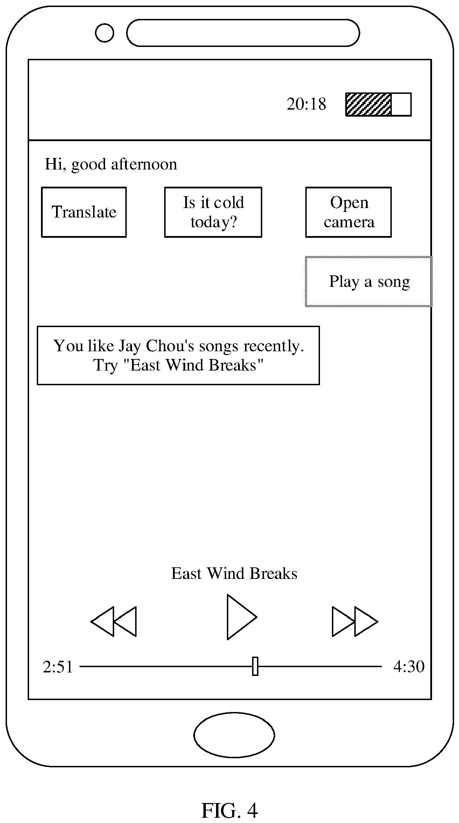

In addition, for the song "East Wind Breaks" in the resource item list that is output by the post-processing module 204, when the song "East Wind Breaks" is recommended to the user, as shown in FIG. 4, the song name "East Wind Breaks" is displayed, and the song is configured with the following script: "You like Jay Chou's songs recently. Try 'East Wind Breaks'". The script is broadcast by a voice assistant while being displayed, so as to complete feedback for the user request.

It may be understood that the recommendation method in this application is applicable to recommendation of content in various resource libraries, and is not limited to the example of music recommendation in the foregoing embodiments.

Based on the foregoing description, the following specifically describes a main working procedure of each device in the system 10.

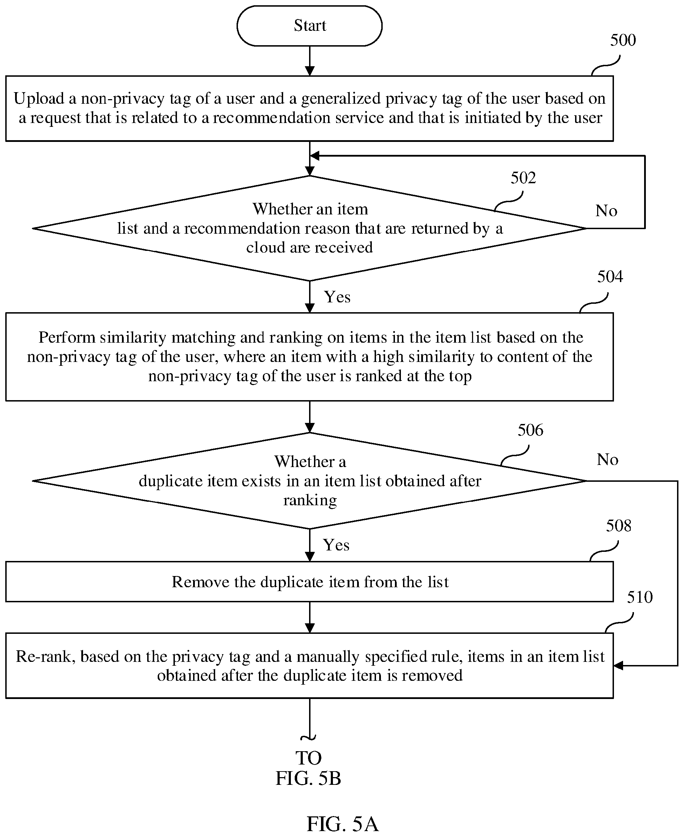

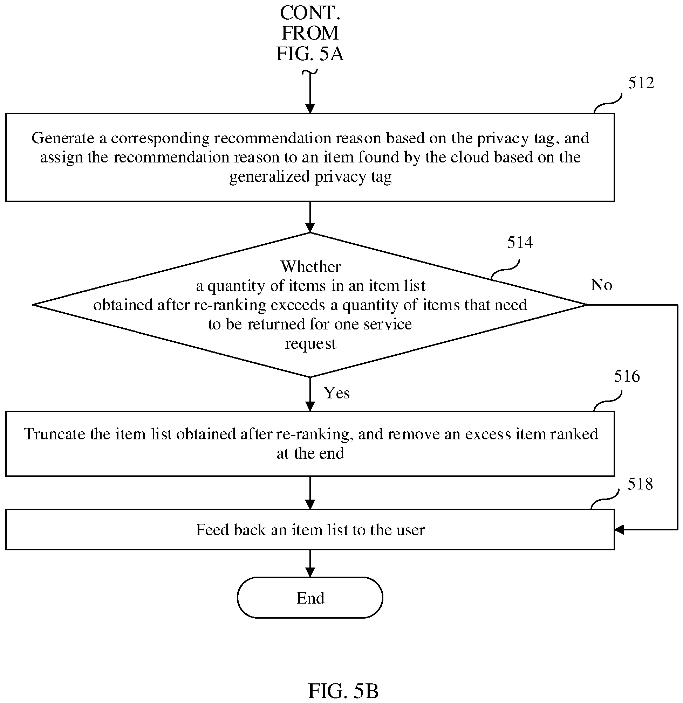

With reference to the foregoing description of the system 10, a working procedure of the terminal in the system 10 is described according to some embodiments of this application. Specific details in the foregoing description are still applicable herein, and details are not described herein again. FIG. 5A and FIG. 5B are a working flowchart of any one of the terminals 100-1 to 100-n in the system 10. Specifically, the terminal 100-1 is used as an example. As shown in FIG. 5A and FIG. 5B, the procedure includes the following steps.
(1) The terminal 200-1 may upload a non-privacy tag of a user and a generalized privacy tag of the user based on a request that is related to a recommendation service and that is initiated by the user (500).

It may be understood that, in other embodiments, alternatively, the terminal 200-1 may actively initiate a recommendation service based on a scenario. This is not limited herein.

(2) The terminal 200-1 may determine whether a resource item list and a recommendation reason that are returned by the cloud 100 are received (502). After determining that the resource item list and the recommendation reason are received, the terminal 200-1 performs similarity matching and ranking on resource items in the resource item list based on the non-privacy tag of the user, where a resource item with a high similarity to content of the non-privacy tag of the user is ranked at the top (504).

(3) The terminal 200-1 may determine whether a duplicate resource item exists in a resource item list obtained after ranking (506), and remove the duplicate resource item from the list when determining that the duplicate resource item exists in the resource item list (508).

(4) The terminal 200-1 may re-rank, based on the privacy tag and a manually specified rule, a resource item list obtained after the duplicate resource item is removed (510), where a resource item with a high matching degree is ranked at the top.

(5) The terminal 200-1 may generate a corresponding recommendation reason based on the privacy tag, and assign the recommendation reason to a resource item found by the cloud 100 based on the generalized privacy tag (512).

(6) The terminal 200-1 may determine whether a quantity of resource items in a resource item list obtained after re-ranking exceeds a quantity of resource items that need to be returned for one service request (514). When determining that the quantity of resource items in the resource item list exceeds the quantity of resource items that need to be returned for one service request, the terminal 200-1 truncates the resource item list obtained after re-ranking and removes an excess resource item ranked at the end (516).

(7) The terminal 200-1 feeds back a resource item list to the user, where feedback manners may include voice broadcast and display (518).

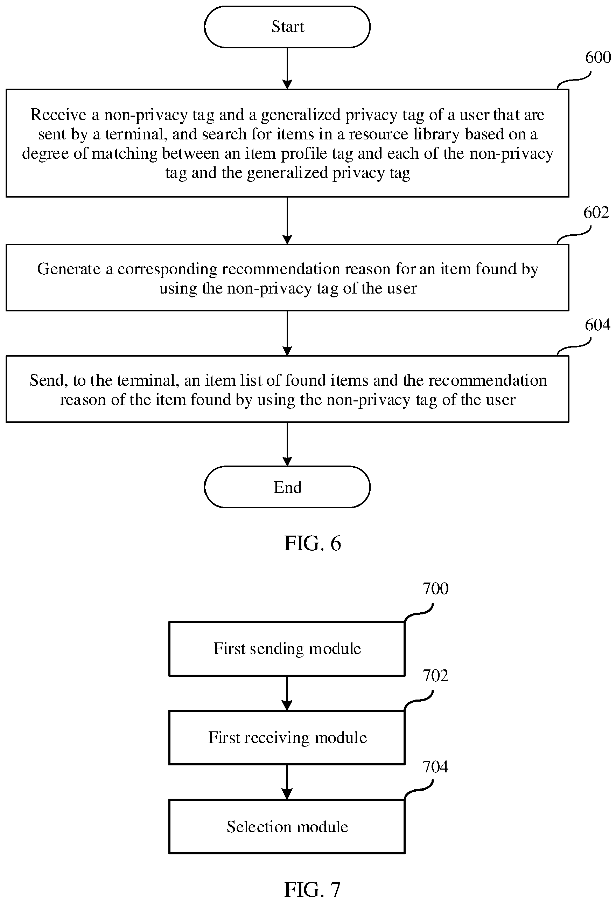

With reference to the foregoing description of the system 10, a working procedure of the cloud 100 in the system 10 is described according to some embodiments of this application. Specific details in the foregoing description are still applicable herein, and details are not described herein again. FIG. 6 is a working flowchart of the cloud 10 in the system 10. Specifically, as shown in FIG. 6, the procedure includes the following steps.
(1) The cloud 100 may receive a non-privacy tag and a generalized privacy tag of a user sent by the terminal 200-1, and search for resource items in a resource library based on a degree of matching between a resource attribute tag and each of the non-privacy tag and the generalized privacy tag (600).
(2) The cloud 100 generates a corresponding recommendation reason for a resource item found by using the non-privacy tag of the user (602).
(3) The cloud 100 sends, to the terminal 200-1, a resource item list of found resource items and the recommendation reason of the resource item found by using the non-privacy tag of the user (603).

FIG. 7 is a schematic diagram of a structure of a recommendation apparatus according to some embodiments of this application. Specifically, as shown in FIG. 7, the recommendation apparatus includes:
a first sending module 700, configured to send a user preference tag to a cloud, where the user preference tag includes a first generalized tag obtained after a first tag generated based on privacy data of a user is generalized;
a first receiving module 702, configured to receive a plurality of resource items that are returned by the cloud and that are found from a resource library based on the user preference tag; and
a selection module 704, configured to select a recommended resource item from the plurality of resource items.

In addition, it may be understood that, in some embodiments, the selection module 704 may further be configured to rank the plurality of resource items based on at least one first tag of the user, to generate a first ranking result, and use a predetermined quantity of resource items that are in the front position in the first ranking result as the recommended resource item.

In addition, it may be understood that, in some embodiments, the user preference tag further includes a second tag generated based on non-privacy data of the user, and the non-privacy data of the user is all data other than the privacy data of the user in data for describing the user; and the plurality of resource items returned by the cloud further include a second resource item found by the cloud based on the second tag. In addition to returning the plurality of resource items, the cloud also returns a second recommendation reason corresponding to the second resource item, where the second recommendation reason is related to the second tag that is used when the second resource item is found. In addition, a broadcast and display module is further configured to display the second resource item and the second recommendation reason on a screen when the recommended resource item includes the second resource item.

In addition, it may be understood that, in some embodiments, the selection module 704 may further be configured to: rank the plurality of resource items based on at least one second tag, to generate a second ranking result; determine whether a duplicate resource item exists in the second ranking result; delete the duplicate resource item if it is determined that the duplicate resource item exists; rank the second ranking result based on the first tag to generate a third ranking result; and use a predetermined quantity of resource items that are in the front position in the third ranking result as the recommended resource item.

In addition, it may be understood that, in some embodiments, the plurality of resource items include a first resource item found by the cloud based on the first generalized tag, and the recommendation apparatus further includes a terminal-side recommendation reason generation module, configured to generate a first recommendation reason of the first resource item based on the first tag corresponding to the first generalized tag that is used when the first resource item is retrieved.

In addition, it may be understood that, in some embodiments, the recommendation apparatus further includes a broadcast and display module, configured to: when the recommended resource items include the first resource item, display the first resource item and the first recommendation reason corresponding to the first resource item on a screen; or broadcast the first recommendation reason of the first resource item through voice, where the first recommendation reason is generated based on the first tag corresponding to the first generalized tag that is used when the first resource item is retrieved, and the first resource item is found by the cloud based on the first generalized tag.

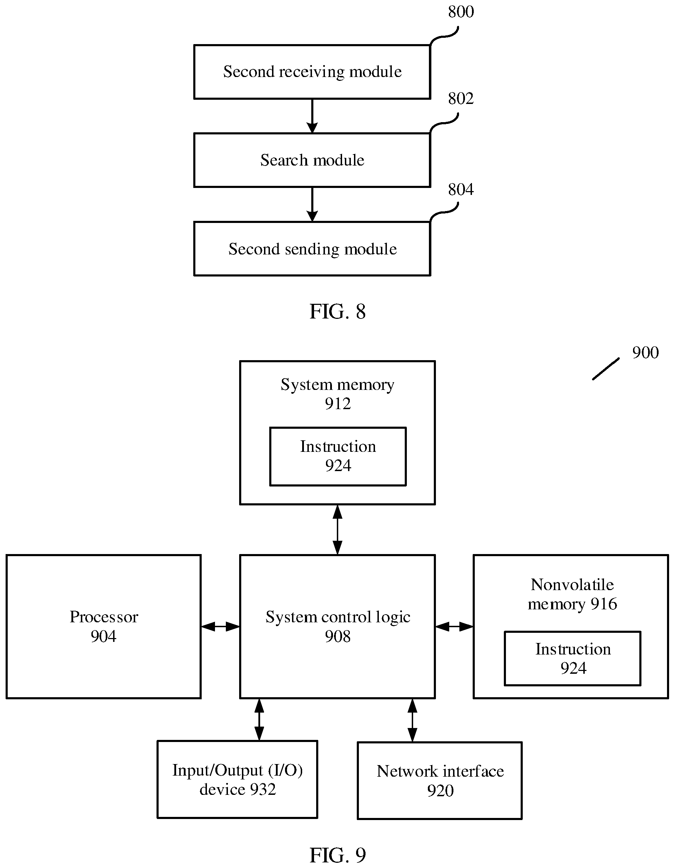

FIG. 8 is a schematic diagram of a structure of a recommendation apparatus according to some embodiments of this application. Specifically, as shown in FIG. 8, the recommendation apparatus includes:
a second receiving module 800, configured to receive a user preference tag from a terminal, where the user preference tag includes a first generalized tag obtained after a first tag generated based on privacy data of a user is generalized;
a search module 802, configured to search, based on the received user preference tag, a resource library for a resource item that matches the user preference tag; and
a second sending module 804, configured to send the found resource item to the terminal when the resource item that matches the user preference tag is found.

In addition, it may be understood that, in some embodiments, the user preference tag further includes a second tag generated based on non-privacy data of the user, and the non-privacy data of the user is all data other than the privacy data of the user in data for describing the user; and a plurality of resource items further include a second resource item found by the cloud based on the second tag.

In addition, it may be understood that, in some embodiments, the recommendation apparatus further includes:
a cloud-side recommendation reason generation module, configured to generate, based on the second tag, a second recommendation reason corresponding to the second resource item.

In addition, it may be understood that, in some embodiments, the recommendation apparatus further includes:
a cloud-side post-processing unit, configured to: rank, based on the second tag, resource items to be sent to the terminal to generate a second ranking result; determine whether a duplicate resource item exists in the second ranking result; and delete the duplicate resource item if it is determined that the duplicate resource item exists.

In addition, it may be understood that, in some embodiments, the resource items include a first resource item found by the cloud based on the first generalized tag.

FIG. 9 is a block diagram of a system 900 according to an embodiment of this application. FIG. 9 schematically shows the example system 900 according to a plurality of embodiments. In an embodiment, the system 900 may include one or more processors 904, system control logic 908 that is connected to at least one of the processors 904, system memory 912 that is connected to the system control logic 908, a nonvolatile memory (NVM) 916 that is connected to the system control logic 908, and a network interface 920 that is connected to the system control logic 908.

In some embodiments, the processor 904 may include one or more single-core or multi-core processors. In some embodiments, the processor 904 may include any combination of a general-purpose processor and a dedicated processor (for example, a graphics processing unit, an application processor, or a baseband processor). In embodiments in which the system 900 uses an eNB (Evolved NodeB, evolved NodeB) 101 or a RAN (Radio Access Network, radio access network) controller 102, the processor 904 may be configured to perform various conforming embodiments, for example, one or more of the plurality of embodiments shown in FIG. 1 to FIG. 4.

In some embodiments, the system control logic 908 may include any suitable interface controller, to provide any suitable interface for at least one of the processors 904 and/or any suitable device or component that communicates with the system control logic 908.

In some embodiments, the system control logic 908 may include one or more memory controllers, to provide an interface that connects to the system memory 912. The system memory 912 may be configured to load and store data and/or instructions. In some embodiments, the memory 912 of the system 900 may include any suitable volatile memory, such as a suitable dynamic random access memory (DRAM).

The NVM/memory 916 may include one or more tangible non-transitory computer-readable media that are configured to store data and/or instructions. In some embodiments, the NVM/memory 916 may include any suitable nonvolatile memory such as a flash memory, and/or any suitable nonvolatile storage device, such as at least one of an HDD (Hard Disk Drive, hard disk drive), a CD (Compact Disc, compact disc) drive, and a DVD (Digital Versatile Disc, digital versatile disc) drive.

The NVM/memory 916 may include some of storage resources on an apparatus on which the system 900 is installed, or may be accessed by a device, but not necessarily a part of the device. For example, the NVM/memory 916 may be accessed over a network through the network interface 920.

In particular, the system memory 912 and the NVM/memory 916 may include a temporary copy of instructions 924 and a permanent copy of the instructions 924, respectively. The instructions 924 may include instructions that are executed by at least one of the processors 904, to enable the system 900 to implement the methods shown in FIG. 3 to FIG. 4. In some embodiments, the instructions 924, hardware, firmware, and/or software components thereof may be additionally/alternatively placed in the system control logic 908, the network interface 920, and/or the processor 904.

The network interface 920 may include a transceiver, and is configured to provide a radio interface for the system 900 to communicate with any other suitable device (such as a front-end module or an antenna) over one or more networks. In some embodiments, the network interface 920 may be integrated with other components of the system 900. For example, the network interface 920 may be integrated with at least one of the processor 904, the system memory 912, the NVM/memory 916, and a firmware device (not shown) having instructions. When at least one of the processors 904 executes the instructions, the system 900 implements the methods shown in FIG. 3 to FIG. 4.

The network interface 920 may further include any suitable hardware and/or firmware, to provide a multiple-input multiple-output radio interface. For example, the network interface 920 may be a network adapter, a wireless network adapter, a phone modem, and/or a wireless modem.

In an embodiment, at least one of the processors 904 may be packaged with logic of one or more controllers used for the system control logic 908, to form a system in package (SiP). In an embodiment, at least one of the processors 904 may be integrated on a same die with logic of one or more controllers used for the system control logic 908, to form a system on a chip (SoC).

The system 900 may further include an input/output (I/O) device 932. The I/O device 932 may include a user interface through which a user can interact with the system 900, and a peripheral component interface through which a peripheral component can also interact with the system 900. In some embodiments, the system 900 further includes a sensor, configured to determine at least one of an environmental condition and location information that are associated with the system 900.

In some embodiments, the user interface may include but is not limited to a display (for example, a liquid crystal display, or a touchscreen display), a speaker, a microphone, one or more cameras (for example, a still image camera and/or a video camera), a flashlight (for example, a light-emitting diode flashlight), and a keyboard.

In some embodiments, the peripheral component interface may include but is not limited to a nonvolatile memory port, an audio jack, and a power interface.

In some embodiments, the sensor may include but is not limited to a gyroscope sensor, an accelerometer, a proximity sensor, an ambient light sensor, and a positioning unit. The positioning unit may further be a part of the network interface 920, or interact with the network interface 920, to communicate with a component (for example, a global positioning system (GPS) satellite) of a positioning network.

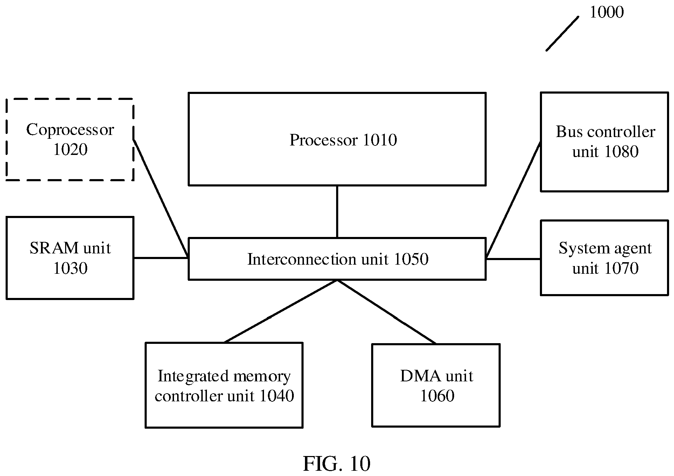

According to an embodiment of this application, FIG. 10 is a block diagram of a SoC (System on a Chip, system on a chip) 1000. In FIG. 10, similar components have a same reference numeral. In addition, a dashed-line box represents an optional feature of a more advanced SoC. In FIG. 10, the SoC 1000 includes an interconnection unit 1050 that is coupled to an application processor 1010, a system agent unit 1070, a bus controller unit 1080, an integrated memory controller unit 1040, a group of coprocessors 1020 or one or more coprocessors 1020 that may include integrated graphics logic, an image processor, an audio processor, and a video processor, a static random access memory (SRAM) unit 1030, and a direct memory access (DMA) unit 1060. In an embodiment, the coprocessor 1020 includes a dedicated processor, for example, a network or communications processor, a compression engine, a GPGPU, a high throughput MIC processor, or an embedded processor.

Embodiments of a mechanism disclosed in this application may be implemented in hardware, software, firmware, or a combination of these implementation methods. The embodiments of this application may be implemented as a computer program or program code executed on a programmable system, and the programmable system includes at least one processor, a storage system (including a volatile memory and a nonvolatile memory and/or a storage element), at least one input device, and at least one output device.

The program code may be applied to input instructions, to perform functions described in this application and generate output information. The output information may be applied to one or more output devices in a known manner. For a purpose of this application, a processing system includes any system having a processor such as a digital signal processor (DSP), a microcontroller, an application-specific integrated circuit (ASIC), or a microprocessor.

The program code can be implemented in a high-level programming language or an object-oriented programming language, to communicate with the processing system. The program code may also be implemented by using an assembly language or a machine language when required. Actually, the mechanism described in this application is not limited to a scope of any particular programming language. In any case, the language may be a compiled language or an interpretive language.

In some cases, the disclosed embodiments may be implemented by hardware, firmware, software, or any combination thereof. The disclosed embodiments may be alternatively implemented as instructions carried by or stored on one or more transitory or non-transitory machine-readable (for example, computer-readable) storage media, and the instructions may be read and executed by one or more processors. For example, the instructions may be distributed through a network or another computer-readable medium. Therefore, the machine-readable medium may include any mechanism for storing or transmitting information in a machine (for example, a computer) readable form, including but not limited to: a floppy disk, a compact disc, an optical disc, a compact disc read-only memory (CD-ROMs), a magneto-optical disc, a read-only memory (ROM), a random access memory (RAM), an erasable programmable read-only memory (EPROM), an electrically erasable programmable read-only memory (EEPROM), a magnetic card, an optical card, a flash memory, or a tangible machine-readable memory used to transmit information (for example, a carrier, an infrared signal, or a digital signal) through a propagating signal in an electrical, optical, acoustic, or another form over the Internet. Therefore, the machine-readable medium includes any type of machine-readable medium suitable for storing or transmitting electronic instructions or information in a machine (for example, a computer) readable form.

In the accompanying drawings, some structural or method features may be shown in a particular arrangement and/or order. However, it should be understood that such a particular arrangement and/or order may not be required. In some embodiments, these features may be arranged in a manner and/or order different from that shown in the descriptive accompanying drawings. In addition, inclusion of the structural or method features in a particular figure does not imply that such features are required in all embodiments, and in some embodiments, these features may not be included or may be combined with other features.

It should be noted that all units/modules mentioned in the device embodiments of this application are logical units/modules. Physically, one logical unit/module may be one physical unit/module, or may be a part of one physical unit/module, or may be implemented by a combination of a plurality of physical units/modules. Physical implementations of these logical units/modules are not the most important, and a combination of functions implemented by these logical units/modules is a key to resolving the technical problem proposed in this application. In addition, to highlight an innovative part of this application, a unit/module that is not closely related to resolving the technical problem proposed in this application is not introduced in the foregoing device embodiments of this application. This does not indicate that there is no other unit/module in the foregoing device embodiments.

It should be noted that, in the examples and specification of this patent, relational terms such as first and second are only used to distinguish one entity or operation from another entity or operation, and do not necessarily require or imply that any actual relationship or sequence exists between these entities or operations. Moreover, the terms "include", "contain", or any other variant thereof is intended to cover a non-exclusive inclusion, so that a process, a method, a resource item, or a device that includes a list of elements not only includes those elements but also includes other elements which are not expressly listed, or further includes elements inherent to such process, method, resource item, or device. An element preceded by "includes a ..." does not, without more constraints, preclude the presence of additional identical elements in the process, method, resource item, or device that includes the element.

Although this application has been illustrated and described with reference to some embodiments of this application, a person of ordinary skill in the art should understand that various changes may be made to this application in form and detail without departing from the spirit and scope of this application.

## Claims

1. A recommendation method, comprising:
sending a user preference tag to a cloud, wherein the user preference tag comprises a first generalized tag obtained after a first tag generated based on privacy data of a user is generalized;
receiving a plurality of resource items that are returned by the cloud and that are found from a resource library based on the user preference tag; and
selecting a recommended resource item from the plurality of resource items.

2. The recommendation method according to claim 1, wherein the selecting a recommended resource item from the plurality of resource items comprises:
ranking the plurality of resource items based on at least one first tag of the user, to generate a first ranking result;
and
using a predetermined quantity of resource items that are in the front position in the first ranking result as the recommended resource item.

3. The recommendation method according to claim 1 or 2, wherein the plurality of resource items comprise a first resource item found by the cloud based on the first generalized tag; and
the method further comprises:
displaying the first resource item and a first recommendation reason corresponding to the first resource item on a screen when the recommended resource item comprises the first resource item, wherein the first recommendation reason is generated based on the first tag corresponding to the first generalized tag that is used when the first resource item is retrieved.

4. The recommendation method according to claim 1, wherein the user preference tag further comprises a second tag generated based on non-privacy data of the user, and the non-privacy data of the user is all data other than the privacy data of the user in data for describing the user; and
the plurality of resource items returned by the cloud further comprise a second resource item found by the cloud based on the second tag.

5. The recommendation method according to claim 4, wherein the plurality of resource items returned by the cloud further comprise a second recommendation reason corresponding to the second resource item, wherein the second recommendation reason is related to the second tag that is used when the second resource item is found.

6. The recommendation method according to claim 5, further comprising:
displaying the second resource item and the second recommendation reason on a screen when the recommended resource item comprises the second resource item.

7. The recommendation method according to any one of claims 4 to 6, wherein the selecting a recommended resource item from the plurality of resource items comprises:
ranking the plurality of resource items based on at least one second tag, to generate a second ranking result.

8. The recommendation method according to claim 7, wherein the selecting a recommended resource item from the plurality of resource items further comprises:
determining whether a duplicate resource item exists in the second ranking result; and
deleting the duplicate resource item when it is determined that the duplicate resource item exists.

9. The recommendation method according to claim 8, wherein the selecting a recommended resource item from the plurality of resource items further comprises:
ranking the second ranking result based on the first tag, to generate a third ranking result; and
using a predetermined quantity of resource items that are in the front position in the third ranking result as the recommended resource item.

10. A recommendation method, comprising:
receiving a user preference tag from a terminal, wherein the user preference tag comprises a first generalized tag obtained after a first tag generated based on privacy data of a user is generalized;
searching, based on the received user preference tag, a resource library for a resource item that matches the user preference tag; and
sending the found resource item to the terminal when the resource item that matches the user preference tag is found.

11. The recommendation method according to claim 10, wherein a user tag further comprises a second tag generated based on non-privacy data of the user, and the non-privacy data of the user is all data other than the privacy data of the user in data for describing the user; and the plurality of resource items further comprise a second resource item found by a cloud based on the second tag.

12. The recommendation method according to claim 11, further comprising:
generating, based on the second tag, a second recommendation reason corresponding to the second resource item.

13. The recommendation method according to claim 12, further comprising:
ranking, based on the second tag, resource items to be sent to the terminal, to generate a second ranking result;
determining whether a duplicate resource item exists in the second ranking result; and
deleting the duplicate resource item when it is determined that the duplicate resource item exists.

14. The recommendation method according to claim 10, wherein the resource item comprises a first resource item found by the cloud based on the first generalized tag.

15. A recommendation apparatus, comprising:
a first sending module, configured to send a user preference tag to a cloud, wherein the user preference tag comprises a first generalized tag obtained after a first tag generated based on privacy data of a user is generalized;
a first receiving module, configured to receive a plurality of resource items that are returned by the cloud and that are found from a resource library based on the user preference tag; and
a selection module, configured to select a recommended resource item from the plurality of resource items.

16. A recommendation apparatus, comprising:
a second receiving module, configured to receive a user preference tag from a terminal, wherein the user preference tag comprises a first generalized tag obtained after a first tag generated based on privacy data of a user is generalized;
a search module, configured to search, based on the received user preference tag, a resource library for a resource item that matches the user preference tag; and
a second sending module, configured to send the found resource item to the terminal when the resource item that matches the user preference tag is found.

17. A machine-readable medium, wherein the machine-readable medium stores instructions, and when the instructions are executed on a machine, the machine is enabled to perform the recommendation method according to any one of claims 1 to 14.

18. A system, comprising:
a memory, configured to store instructions executed by one or more processors of the system; and
a processor, which is one of the processors of the system, and is configured to perform the recommendation method according to any one of claims 1 to 14.
